(19) Europäisches Patentamt
European Patent Office
Office européen des brevets

(11) **EP 4 064 550 B1**

(12) **EUROPÄISCHE PATENTSCHRIFT**

(45) Veröffentlichungstag und Bekanntmachung des Hinweises auf die Patenterteilung:
**05.06.2024 Patentblatt 2024/23**

(21) Anmeldenummer: **22189504.8**

(22) Anmeldetag: **09.08.2022**

(51) Internationale Patentklassifikation (IPC):
**H02P 6/18** *(2016.01)* **H02P 21/14** *(2016.01)*
**H02P 1/02** *(2006.01)*

(52) Gemeinsame Patentklassifikation (CPC):
**H02P 6/182; H02P 1/029; H02P 6/18; H02P 6/20;**
H02P 2207/05

(54) **PERMANENTMAGNET-SYNCHRON-MASCHINE**

PERMANENT MAGNET SYNCHORNOUS MACHINE

MACHINE SYNCHRONE À AIMANTS PERMANENTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**28.09.2022 Patentblatt 2022/39**

(73) Patentinhaber: **Pfeiffer Vacuum Technology AG 35614 Asslar (DE)**

(72) Erfinder: **WANG, Jinou 35606 Solms-Oberbiel (DE)**

(74) Vertreter: **Manitz Finsterwald Patent- und Rechtsanwaltspartnerschaft mbB Martin-Greif-Strasse 1 80336 München (DE)**

(56) Entgegenhaltungen:
**CN-A- 106 026 817 CN-A- 112 910 329**

**Beschreibung**

Die Erfindung betrifft eine Permanentmagnet-Synchronmaschine und eine Vakuumpumpe mit einer solchen sowie ein Verfahren zum Ermitteln eines Winkels und einer Winkelgeschwindigkeit eines Rotors in einer Permanentmagnet-Synchronmaschine.

Bei einem geberlosen Betrieb einer Permanentmagnet-Synchronmaschine wird die Winkelinformation, d. h. der Phasenwinkel und die Winkelgeschwindigkeit, für den magnetischen Fluss des Rotors der Permanentmagnet-Synchronmaschine anhand einer Messung der durch den magnetischen Fluss induzierten Spannung ermittelt, die auch als rückwirkende elektromagnetische Kraft (Gegen-EMK) bezeichnet wird. Es hat sich gezeigt, dass der geberlose Betrieb, der auf einem Modell der Gegen-EMK basiert, aufgrund seiner Robustheit und seiner hohen Leistungsfähigkeit im Bereich mittlerer bis hoher Drehzahlen eine optimale Lösung für Anwendungen der Permanentmagnet-Synchronmaschine darstellt, beispielsweise als Antrieb eines Rotors in einer Vakuumpumpe.

Im Bereich niedriger Drehzahlen, beispielsweise beim Hochfahren der Permanentmagnet-Synchronmaschine unmittelbar nach dem Stillstand, stellt die Messung der Gegen-EMK jedoch eine technische Herausforderung dar, da die zu messende induzierte Spannung aufgrund der Gegen-EMK ungefähr die gleiche Größe bzw. den gleichen Betrag wie das elektrische Hintergrundrauschen aufweist. Die zu messende Spannung aufgrund der Gegen-EMK weist folglich bei geringen Drehzahlen ein sehr geringes Signal-Rauschverhältnis auf. Dies gilt insbesondere bei sehr geringen Drehzahlen von etwa 1% der Nenn- oder Betriebsdrehzahl der Permanentmagnet-Synchronmaschine.

Folglich werden bei niedrigen Drehzahlen bisher spezielle Ansätze zum Antreiben der Permanentmagnet-Synchronmaschine verwendet, bei denen keine Information bezüglich der Gegen-EMK vorzuliegen braucht. Mittels dieser Ansätze wird die Permanentmagnet-Synchronmaschine auf eine Drehzahl gebracht, bei welcher das Umschalten in einen Normalmodus möglich ist, d.h. in den Betrieb basierend auf der Messung der Gegen-EMK. Diese speziellen Ansätze umfassen einerseits das Hochfahren der Permanentmagnet-Synchronmaschine mit Regelung, wobei der Phasenwinkel des Rotors überwacht wird und dessen Beschleunigung angepasst wird, sowie ein gesteuertes Hochfahren ("Open Loop"), d.h. ohne Rückkopplung im Sinne einer Regelung, wobei es sich im Wesentlichen um eine Spannungs-Frequenzsteuerung handelt. Diese beiden Ansätze sind jedoch nur für spezielle Typen der Permanentmagnet-Synchronmaschinen geeignet.

Ferner ist ein problemloser Übergang in den Normalmodus mit Steuerung anhand der Gegen-EMK für die Stabilität und Robustheit des gesamten geberlosen Betriebs der Permanentmagnet-Synchronmaschine entscheidend. Daher verwenden verbesserte Ansätze des gesteuerten Hochfahrens ohne Rückkopplung eine zusätzliche Synchronisationsstufe bzw. Synchronisationsphase während des Hochfahrens, die dazu beiträgt, den Rotorwinkel vor der eigentlichen Beschleunigung in eine definierte Position zu bringen.

Solche Ansätze sind beispielsweise in EP 3 422 559 B1 und EP 3 726 725 A1 beschrieben und haben sich beim Hochfahren von Permanentmagnet-Synchronmaschinen aus dem Stillstand des Rotors bewährt. Technische Herausforderungen treten jedoch dann auf, wenn sich der Rotor der Permanentmagnet-Synchronmaschine bereits langsam dreht, bevor in die zusätzliche Synchronisationsstufe eingetreten wird. In diesem Fall ist es relativ unwahrscheinlich, dass der Rotor in der Synchronisation durch den Synchronisations-Spannungsvektor "eingefangen" wird. Dies kann zu einem inkorrekten Anfangswinkel führen, wenn die Permanentmagnet-Synchronmaschine in die eigentliche Hochlaufphase eintritt, und dadurch kann der gesamte Hochlaufprozess der Permanentmagnet-Synchronmaschine scheitern. In der Praxis können mehrere Versuche erforderlich sein, um die Permanentmagnet-Synchronmaschine aus einem Zustand ohne Stillstand des Rotors hochzufahren.

Aus der CN 112 910 329 A sind eine Permanentmagnet-Synchronmaschine und ein Verfahren mit den Merkmalen gemäß dem jeweiligen Oberbegriff der unabhängigen Ansprüche bekannt.

Eine Aufgabe der Erfindung besteht darin, eine Permanentmagnet-Synchronmaschine und ein Verfahren zu schaffen, die ein zuverlässiges Hochfahren der Permanentmagnet-Synchronmaschine aus einem Anfangszustand ohne Stillstand des Rotors ermöglichen.

Diese Aufgabe wird durch eine Permanentmagnet-Synchronmaschine und durch ein entsprechendes Verfahren mit den Merkmalen der unabhängigen Ansprüche gelöst.

Die Permanentmagnet-Synchronmaschine ist insbesondere als Drehstrommaschine einer Vakuumpumpe ausgebildet. Die Permanentmagnet-Synchronmaschine umfasst einen Rotor und eine Einrichtung zum Ermitteln eines Winkels und einer Winkelgeschwindigkeit des Rotors bei kleinen Drehzahlen des Rotors unterhalb einer Betriebsdrehzahl der Permanentmagnet-Synchronmaschine mittels einer rückwirkenden elektromotorischen Kraft, die anhand zumindest zweier durch den Rotor induzierter Spannungen erfassbar ist, während die Permanentmagnet-Synchronmaschine geberlos betrieben wird.

Die Einrichtung zum Ermitteln des Winkels und der Winkelgeschwindigkeit des Rotors umfasst einen Analog-Digitalwandler, eine Mittelungseinrichtung, ein Festlegungsmodul und ein Schätzmodul. Der Analog-Digitalwandler digitalisiert die zumindest zwei induzierten Spannungen, die durch die rückwirkende elektromotorische Kraft (Gegen-EMK) hervorgerufen werden. Die Mittelungseinrichtung berechnet zumindest zwei gemittelte Spannungen über eine variable Anzahl N von Messwerten der zumindest zwei digitalisierten Spannungen. Die variable Anzahl N wird mittels des Festlegungsmoduls in Abhängigkeit von der Drehzahl des Rotors festgelegt. Schließlich schätzt das Schätzmodul den Winkel und die Winkelgeschwindigkeit des Rotors anhand der zumindest zwei gemittelten Spannungen.

Die Permanentmagnet-Synchronmaschine zeichnet sich dadurch aus, dass aufgrund der Mittelung über N Messwerte der zwei digitalisierten Spannungen das Signal-Rauschverhältnis derart verbessert wird, dass auch bei geringen Drehzahlen des Rotors eine zuverlässige Schätzung des Winkels und der Winkelgeschwindigkeit anhand der zwei induzierten Spannungen ermöglicht wird, die durch die rückwirkende elektromotorische Kraft im geberlosen Betrieb der Permanentmagnet-Synchronmaschine hervorgerufen werden. Bei der Mittelung über N Messwerte nimmt die Amplitude des unkorrelierten Rauschens mit $\sqrt{N}$ zu, während die jeweilige Amplitude der digitalisierten Spannungen, die als kohärentes Messsignal angesehen werden können, bei der Mittelung mit N zunimmt. Folglich wird das Signal-Rauschverhältnis aufgrund der Mittelung über N Messwerte ebenfalls um den Faktor $\sqrt{N}$ erhöht.

Bei der Mittelung wird angenommen, dass die zwei induzierten Spannungen über die N Messwerte näherungsweise konstant bleiben, was insbesondere bei geringen Drehzahlen des Rotors gerechtfertigt ist. Um beispielsweise Probleme mit Aliasing zu vermeiden, ist die Anzahl N für die Mittelung der Messwerte jedoch eine variable Größe, die von der Drehzahl des Rotors abhängt. Es hat sich gezeigt, dass bei sehr geringen Drehzahlen ein hoher Wert für N von etwa 100 erforderlich ist, während N bei höheren Drehzahlen kontinuierlich verringert werden kann, so dass bei ausreichender Drehzahl des Rotors N = 1 ist und die Mittelung dadurch wegfällt.

Wenn der Analog-Digitalwandler die zumindest zwei induzierten Spannungen mit einer festen Abtastfrequenz $f_s$ digitalisiert, weist die gemittelte Spannung, die von der Mittelungseinrichtung ausgegeben wird, eine neue äquivalente Abtastfrequenz von $f_s/N$ auf. Mit anderen Worten erfolgt durch die Mittelungseinrichtung ein Downsampling mit dem Faktor N. Die Annahme, dass die induzierten Spannungen über die N Messwerte konstant sind, ist jedoch nur korrekt, solange die Anzahl N nicht zu groß wird. Im Einzelnen muss das Produkt aus N und der Winkelgeschwindigkeit bzw. Drehfrequenz des Rotors der Bedingung genügen, dass dieses Produkt klein gegen $2\pi f_s$ ist. Das Festlegungsmodul legt daher die variable Anzahl N derart fest, dass diese Bedingung erfüllt ist. Bei einem Hochlauf der Permanentmagnet-Synchronmaschine wird beispielsweise die vorstehende Bedingung für die Anzahl N ständig überwacht, da sich die Drehfrequenz bzw. Drehzahl des Rotors kontinuierlich ändert.

Der Vorteil der Erfindung besteht darin, dass der Winkel und die Winkelgeschwindigkeit des Rotors auch bei sehr geringen Drehzahlen anhand der rückwirkenden elektromotorischen Kraft geschätzt werden können und dadurch beispielsweise beim Hochlauf der Permanentmagnet-Synchronmaschine keiner der anderen, eingangs beschriebenen Ansätze zur Synchronisation erforderlich ist. Da der Winkel und die Winkelgeschwindigkeit des Rotors anhand der induzierten Spannung basierend auf der rückwirkenden elektromotorischen Kraft ermittelt werden, kann ein korrekter Anfangswinkel für die Synchronisation zu Beginn der Hochlaufphase der Permanentmagnet-Synchronmaschine auch dann ermittelt werden, wenn sich der Rotor nicht im Stillstand befindet und sich mit einer geringen Drehzahl dreht. Ein zuverlässiges Hochfahren der Permanentmagnet-Synchronmaschine ist daher auch für dieses Szenario möglich, d.h. bei einer langsamen Drehung des Rotors während des Eintretens in die Synchronisationsphase.

Wenn die Permanentmagnet-Synchronmaschine beispielsweise als Drehstrommaschine einer Vakuumpumpe ausgebildet ist, wird die rückwirkende elektromotorische Kraft anhand dreier induzierter Spannungen erfasst, die wiederum mittels einer Clarke-Transformation in eine Spannung mit einem Realteil und einem Imaginärteil transformiert werden können. In diesem Fall umfassen die zumindest zwei gemessene Spannungen den Realteil und den Imaginärteil der Spannung, die aus der Clarke-Transformation resultiert. Die Mittelung der digitalisierten induzierten Spannungen erfolgt in diesem Fall separat für den Realteil und den Imaginärteil der Spannung nach der Clarke-Transformation, und das Schätzmodul berücksichtigt sowohl den gemittelten Realteil als auch den ermittelten Imaginärteil der Spannung, um den Winkel und die Winkelgeschwindigkeit des Rotors zu schätzen.

Die erfindungsgemäße Permanentmagnet-Synchronmaschine kann vorteilhaft in Turbomolekularpumpen verwendet werden, die häufig eine lange Auslaufphase bis zum Stillstand aufweisen. Bei den Turbomolekularpumpen kann folglich ein erneutes Einschalten bereits dann erfolgen, wenn sich der Rotor der jeweiligen Turbomolekularpumpe noch nicht im Stillstand befindet. In diesem Fall stellt das Schätzmodul eine zuverlässige Schätzung des Winkels und der Winkelgeschwindigkeit des Rotors bereit, so dass die Turbomolekularpumpe zuverlässig hochgefahren werden kann.

Das Festlegungsmodul initialisiert die Anzahl N mit einem vorbestimmten Wert und passt die Anzahl N iterativ in Abhängigkeit von der ermittelten Winkelgeschwindigkeit an. Die Mittelungseinrichtung kann entsprechend iterativ jeweils N Messwerte der zumindest zwei digitalisierten Spannungen erfassen. Die Aktualisierung der Anzahl N erfolgt somit in vorbestimmten Zeitintervallen anhand einer Rückkopplung über die ermittelte Winkelgeschwindigkeit. Beispielsweise kann das Signal-Rauschverhältnis eines Signals ermittelt werden, das die Winkelgeschwindigkeit repräsentiert, und die Anzahl N kann anhand dieses Signal-Rauschverhältnisses angepasst werden. Dadurch kann die Zuverlässigkeit bei der Ermittlung des Winkels und der Winkelgeschwindigkeit des Rotors verbessert werden.

Das Festlegungsmodul erhöht die Anzahl N, wenn die Winkelgeschwindigkeit einen unteren Schwellenwert unterschreitet, und es verringert die Anzahl N, wenn die Winkelgeschwindigkeit einen oberen Schwellenwert überschreitet. Den oberen und unteren Schwellenwert kann das Festlegungsmodul anhand eines vorgegebenen Sollwerts für das Signal-Rauschverhältnis der Winkelgeschwindigkeit ermitteln. Es hat sich gezeigt, dass es für jede Anzahl N einen optimalen Bereich der Winkelgeschwindigkeit gibt, in welchem das Signal-Rauschverhältnis und die Bandbreite, d.h. die Differenz zwischen dem oberen und dem unteren Schwellenwert, miteinander abgeglichen sind. Durch die dynamische Anpassung der Anzahl N, d.h. deren Erhöhung beim Überschreiten des unteren Schwellenwerts und deren Verringerung beim Überschreiten des oberen Schwellenwerts, kann sichergestellt werden, dass einerseits ein ausreichendes Signal-Rauschverhältnis für eine zuverlässige Ermittlung des Winkels und der Winkelgeschwindigkeit des Rotors zur Verfügung steht, während andererseits eine Mittelung über eine zu große Anzahl N verhindert wird, die zu Aliasing-Problemen führen könnte.

Vorteilhafte Weiterbildungen der Erfindung sind in den Unteransprüchen, der Beschreibung und den Zeichnungen angegeben.

Das Festlegungsmodul kann die Anzahl N verringern, wenn die Drehzahl des Rotors zunimmt. Beispielsweise kann eine Anzahl N = 100 bei sehr geringen Drehzahlen verwendet werden, die bei höheren, aber immer noch geringen Drehzahlen auf N = 10 verringert wird, während N = 1 ab einer ausreichenden Drehzahl verwendet wird. Zwischen diesen Stufen sind jedoch beliebige Zwischenstufen für N möglich, um die dynamische Anpassung der Anzahl N zu verbessern.

Das Schätzmodul kann ferner eine Drehrichtung des Rotors anhand der zumindest zwei gemittelten Spannungen ermitteln. Dies kann dadurch erfolgen, dass das Schätzmodul beispielsweise einen Nulldurchgang für eine der zwei gemittelten Spannungen und das Vorzeichen für die andere der zwei gemittelten Spannungen identifiziert. Die ermittelte Drehrichtung des Rotors stellt eine weitere Information dar, die beispielsweise bei der Synchronisation während des Hochlaufs der Permanentmagnet-Synchronmaschine verwendet werden kann. Dadurch kann die Zuverlässigkeit der Synchronisation und des gesamten Hochlaufs verbessert werden. Die Ermittlung der Drehrichtung des Rotors kann mit einer vorbestimmten Häufigkeit erfolgen.

Die Einrichtung zum Ermitteln des Winkels und der Winkelgeschwindigkeit des Rotors kann ferner ein Kalmanfilter umfassen, das auf einem mechanischen Modell für die Bewegung des Rotors basiert. Das Kalmanfilter kann eine A-priori-Schätzung und eine A-posteriori-Schätzung für den Winkel des Rotors, für die Winkelgeschwindigkeit des Rotors und für ein Bremsmoment des Rotors umfassen. Die Verwendung eines solchen Kalmanfilters kann das Signal-Rauschverhältnis der zwei gemittelten Spannungen verbessern. Dadurch wird die Zuverlässigkeit bei der Schätzung des Winkels und der Winkelgeschwindigkeit des Rotors weiter verbessert.

Die Erfindung betrifft ferner eine Vakuumpumpe mit einer Permanentmagnet-Synchronmaschine, wie diese vorstehend beschrieben ist.

Darüber hinaus betrifft die Erfindung ein Verfahren zum Ermitteln eines Winkels und einer Winkelgeschwindigkeit eines Rotors in einer Permanentmagnet-Synchronmaschine bei kleinen Drehzahlen des Rotors unterhalb einer Betriebsdrehzahl der Permanentmagnet-Synchronmaschine, wobei die Permanentmagnet-Synchronmaschine den Rotor und einen Analog-Digitalwandler umfasst und geberlos betrieben wird.

Gemäß dem Verfahren werden zumindest zwei durch den Rotor induzierte Spannungen mittels des Analog-Digitalwandlers erfasst. Die zwei induzierten Spannungen repräsentieren eine rückwirkende elektromotorische Kraft (Gegen-EMK) in einem geberlosen Betrieb der Permanentmagnet-Synchronmaschine. Mittels des Analog-Digitalwandlers werden die zumindest zwei induzierten Spannungen digitalisiert. Anschließend werden anhand einer variablen Anzahl N von Messwerten der zumindest zwei digitalisierten Spannungen zumindest zwei gemittelte Spannungen berechnet. Die variable Anzahl N wird in Abhängigkeit von der Drehzahl des Rotors der Permanentmagnet-Synchronmaschine festgelegt. Anhand der zumindest zwei gemittelten Spannungen werden der Winkel und die Winkelgeschwindigkeit des Rotors geschätzt.

Das Verfahren umfasst somit Verfahrensschritte, die mittels der vorstehend beschriebenen Einrichtung zum Ermitteln des Winkels und der Winkelgeschwindigkeit des Rotors während des Betriebs bzw. Hochfahrens der Permanentmagnet-Synchronmaschine ausgeführt werden. Die vorstehenden Ausführungen zu der erfindungsgemäßen Permanentmagnet-Synchronmaschine gelten folglich auch für das erfindungsgemäße Verfahren, insbesondere hinsichtlich der Offenbarung, der Vorteile und der bevorzugten Ausführungsformen.

Die Anzahl N wird mit einem vorbestimmten Wert initialisiert und anschließend iterativ in Abhängigkeit von der ermittelten Winkelgeschwindigkeit angepasst. Bei dieser Anpassung wird die Anzahl N erhöht, wenn die Winkelgeschwindigkeit einen unteren Schwellenwert unterschreitet, während die Anzahl N verringert wird, wenn die Winkelgeschwindigkeit einen oberen Schwellenwert überschreitet.

Eine Drehrichtung des Rotors kann anhand der zumindest zwei gemittelten Spannungen ermittelt werden. Im Einzelnen kann die Drehrichtung des Rotors anhand eines Nulldurchgangs für eine der zwei gemittelten Spannungen und anhand des Vorzeichens für die andere der zwei gemittelten Spannungen identifiziert werden.

Nachfolgend wird die Erfindung beispielhaft anhand einer vorteilhaften Ausführungsform unter Bezugnahme auf die beigefügten Figuren beschrieben. Es zeigen, jeweils schematisch:

Fig. 1A    einen beispielhaften Drehstrom-Wechselrichter für eine Permanentmagnet-Synchronmaschine,

Fig. 1B    einen in einem orthogonalen Koordinatensystem dargestellten Spannungsvektor,

Fig. 2    Module einer Einrichtung zum Ermitteln eines Winkels und einer Winkelgeschwindigkeit eines Rotors der Permanentmagnet-Synchronmaschine,

Fig. 3    ein Flussdiagramm der Schritte zum Festlegen der Anzahl N von Spannungswerten zur Mittelung,

Fig. 4    ein Schätzmodul der Einrichtung von Fig. 2,

Fig. 5    eine zweite Ausführungsform der Einrichtung zum Ermitteln des Winkels und der Winkelgeschwindigkeit des Rotors der Permanentmagnet-Synchronmaschine und

Fig. 6    ein Diagramm einer Vakuumanlage, bei der Vakuumpumpen mit einer erfindungsgemäßen Permanentmagnet-Synchronmaschine angetrieben werden.

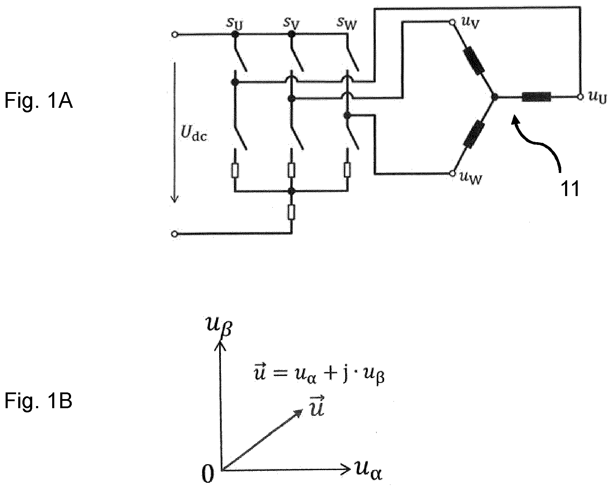

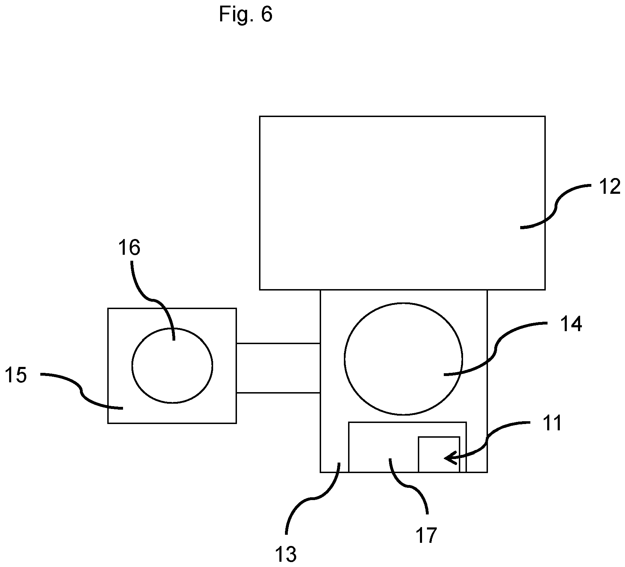

Fig. 1A zeigt schematisch einen beispielhaften Drehstrom-Wechselrichter 11, der für jede von drei Phasen $\zeta$ = U, V, W eine Halbbrücke aufweist, sodass die Ausgangsspannung uv, uu, uw einer jeweiligen Phase U, V, W entweder auf das positive oder auf das negative Zwischenkreispotential $U_{dc}$ gelegt werden kann. Die Ausgangsspannungen uv, uu, uw sind zur Versorgung entsprechender Elektromagneten einer Permanentmagnet-Synchronmaschine 17 (vgl. Fig. 6), d. h. für deren Stator, und somit zum Antreiben der Permanentmagnet-Synchronmaschine 17 vorgesehen. Das Spannungspotential $u_\zeta$ einer jeweiligen Phase $\zeta$ nimmt den Wert $U_{dc}$ an, wenn der Schaltzustand $s_\zeta$ gleich H ist, sowie den Wert 0, wenn der Schaltzustand $s_\zeta$ = L ist. Bei einem gegebenen Taktverhältnis $\lambda_\zeta$ e [0,1] ergibt sich für die jeweilige Phase $\zeta$ eine Spannung $u_\zeta = \lambda_\zeta \times U_{dc}$.

Fig. 1B zeigt einen Spannungsvektor $\vec{u}$ in einem orthogonalen Koordinatensystem. Die Koordinaten des Koordinatensystems entsprechen dem Realteil $u_\alpha$ und dem Imaginärteil $u_\beta$ des Spannungsvektors. Der Spannungsvektor lässt sich somit durch folgende äquivalente Beziehungen darstellen:

$$\vec{u}(t) = u_\alpha + j \cdot u_\beta \tag{1}$$

$$\vec{u}(t) = u(t) \cdot e^{j(2\pi f(t)\cdot t + \gamma_0)} \tag{2}$$

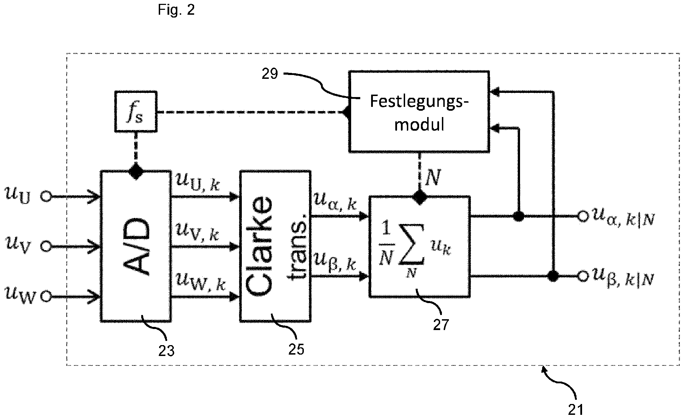

In der zweiten Gleichung bezeichnet f (t) die Rotationsfrequenz des Spannungsvektors, während $\gamma_0$ eine Phasenverschiebung ist. Fig. 2 ist somit das übliche Zeigerdiagramm des Spannungsvektors, dessen Amplitude oder Betrag u als Funktion der Zeit t mit der Frequenz f umläuft.

Die drei Spannungspotentiale oder Ausgangsspannungen uu, uv und uw zur Versorgung der Permanentmagnet-Synchronmaschine 17 können unter Verwendung der Clarke-Transformation in den durch den Real- und Imaginärteil $u_\alpha$, $u_\beta$ definierten Spannungsvektor transformiert werden:

$$\begin{bmatrix} u_\alpha \\ u_\beta \end{bmatrix} = \frac{2}{3} \begin{bmatrix} 1 & -\frac{1}{2} & -\frac{1}{2} \\ 0 & \frac{\sqrt{3}}{2} & -\frac{\sqrt{3}}{2} \end{bmatrix} \begin{bmatrix} u_U \\ u_V \\ u_W \end{bmatrix} \tag{3}$$

Unter Verwendung der inversen Clarke-Transformation kann der gewünschte Spannungsvektor $\vec{u}^* = u_\alpha^* + j \cdot u_\beta^*$ wie folgt auf die drei auf das Nullpotential bezogenen Spannungspotentiale $u_{U,0}^*$, $u_{V,0}^*$ und $u_{W,0}^*$ transformiert werden:

$$\begin{bmatrix} u^*_{U,0} \\ u^*_{V,0} \\ u^*_{W,0} \end{bmatrix} = \begin{bmatrix} 1 & 0 \\ -\dfrac{1}{2} & \dfrac{\sqrt{3}}{2} \\ -\dfrac{1}{2} & -\dfrac{\sqrt{3}}{2} \end{bmatrix} \begin{bmatrix} u^*_{\alpha} \\ u^*_{\beta} \end{bmatrix} \qquad (4)$$

Im Folgenden wird davon ausgegangen, dass die rückwirkende elektromotorische Kraft (Gegen-EMK) die einzige Quelle zur Ermittlung eines Winkels und einer Winkelgeschwindigkeit des Rotors ist. Bei diesem Winkel und dieser Winkelgeschwindigkeit handelt es sich jeweils um elektrische Größen. Die Injektion eines Hochfrequenzsignals (HF-Signals) zur Ermittlung des Rotorwinkels soll nicht betrachtet werden.

Wenn der magnetische Fluss $\Psi_m$ als Rotorschlussverkettung gegeben ist, bildet der Rotorwinkel $\gamma$ einen Drehzeiger in dem $\alpha$-$\beta$-Koordinatensystem nach der Clarke-Transformation wie folgt:

$$\vec{\Psi}_m = \Psi_m \cdot e^{j\gamma_m}, \qquad (5)$$

Wenn sich der Rotor mit einer Winkelgeschwindigkeit $\omega$ dreht, deren Betrag grö-ßer als Null ist, existiert eine induzierte Spannung wie folgt:

$$\vec{U}_i = j \cdot \omega \cdot \vec{\Psi}_m, \qquad (6)$$

$\vec{U}_i$ ist die rückwirkende elektromotorische Kraft (Gegen-EMK), die im vorstehend beschriebenen Messsystem nach der Clarke-Transformation folgendermaßen gegeben ist:

$$\vec{U}_i = u_{\alpha} + j \cdot u_{\beta} \qquad (7)$$

Mit den zwei unabhängigen Messungen bzw. induzierten Spannungen $\tilde{u}_{\alpha}$ und $\tilde{u}_{\beta}$ kann die Schätzung des Rotorwinkels $\gamma$ ausgedrückt werden durch:

$$\hat{\gamma} = \tan^{-1}\frac{\tilde{u}_{\alpha}}{\tilde{u}_{\beta}} - sign(\hat{\omega}) \cdot \frac{\pi}{2} \qquad (8)$$

$\hat{\omega}$ ist die Schätzung der tatsächlichen Winkelgeschwindigkeit $\omega$ und es gilt:

$$|\hat{\omega}| = \frac{1}{\Psi_m} \cdot \sqrt{\tilde{u}_{\alpha}^2 + \tilde{u}_{\beta}^2} \qquad (9)$$

Diese Gleichung enthält lediglich den Betrag von $\hat{\omega}$, und die Ermittlung der Drehrichtung $sign(\hat{\omega})$ wird nachstehend erläutert. Hier und im Folgenden repräsentieren Variablen mit Tilde-Zeichen wie etwa $\tilde{x}$ tatsächlich erfasste Messwerte jeweiliger Größen, während Variablen mit Zirkumflex bzw. Dach wie etwa $\hat{x}$ eine Schätzung für einen tatsächlichen Wert x repräsentieren, der im Allgemeinen nicht verfügbar ist und daher modelliert bzw. geschätzt wird.

Unter Berücksichtigung der vorstehenden Gleichungen (5) bis (7) können die jeweiligen Messwerte der induzierten Spannung wie folgt ausgedrückt werden:

$$\tilde{u}_{\alpha} = -\omega \cdot \Psi_m \cdot \sin\gamma + v_{\alpha} \qquad (10)$$

$$\tilde{u}_{\beta} = \omega \cdot \Psi_m \cdot \cos\gamma + v_{\beta} \qquad (11)$$

wobei $v_{\alpha}$ und $v_{\beta}$ das jeweilige Hintergrundrauschen bezeichnen. Das jeweilige Hintergrundrauschen kann als unabhängig von den jeweiligen Messwerten und daher als weißes Rauschen angesehen werden.

Das Signal-Rauschverhältnis (SNR) der jeweiligen Messwerte $\tilde{u}_\alpha$ und $\tilde{u}_\beta$ ist für sehr geringe Drehzahlen bzw. Winkelgeschwindigkeiten ω aufgrund des weißen Rauschens offensichtlich sehr gering. Dadurch sind die vorstehenden Gleichungen (8) und (9) zur Schätzung des Rotorwinkels γ bei geringen Drehzahlen eigentlich nicht geeignet.

Für eine gegebene Permanentmagnet-Synchronmaschine oder ein ähnliches Antriebssystem ist der magnetische Fluss $\Psi_m$ durch die spezifische Motoranwendung festgelegt und kann daher nicht zum Verbessern des Signal-Rauschverhältnisses erhöht werden. Auf ähnliche Weise sind die Komponenten des Rauschens $v_\alpha$ und $v_\beta$ durch die Hardware-Ausgestaltung des Wechselrichters 11 (vgl. Fig. 1) fest vorgegeben, so dass das Rauschen $v_\alpha$ und $v_\beta$ normalerweise nicht weiter verringert werden kann. Im Folgenden werden daher neue technische Mittel beschrieben, die eine Erhöhung des Signal-Rauschverhältnisses zum Verbessern der Schätzung des Rotorwinkels ermöglichen.

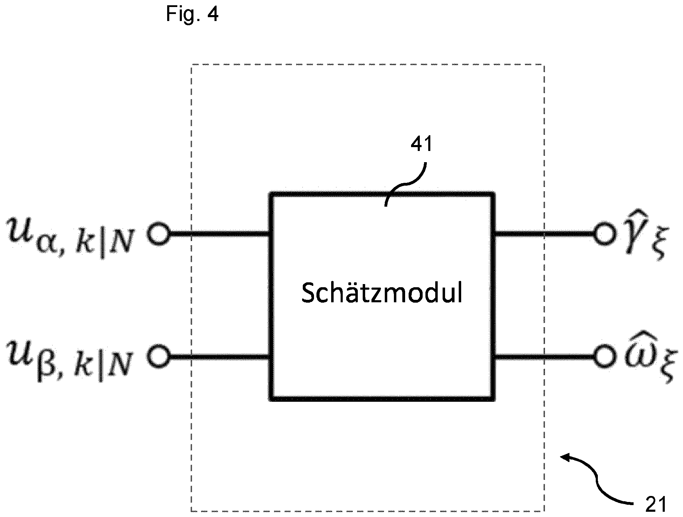

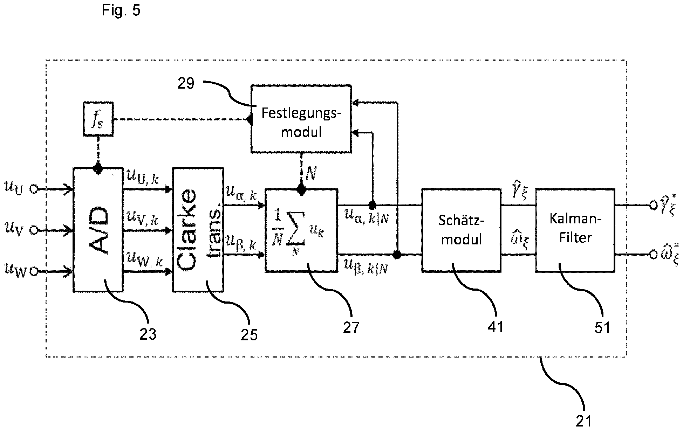

Fig. 2 zeigt ein schematisches Diagramm von Modulen einer ersten Ausführungsform einer Einrichtung 21 zum Ermitteln des Winkels γ und der Winkelgeschwindigkeit ω des Rotors. Ein weiteres Modul und eine zweite Ausführungsform der Einrichtung 21 sind in Fig. 4 bzw. 5 dargestellt.

Die Einrichtung 21 umfasst einen Analog-Digitalwandler 23, der die analogen Signale uu, uv und uw des Wechselrichters 11 von Fig. 1 empfängt und in entsprechende digitale Signale $u_{U,k}$, $u_{V,k}$ und $u_{W,k}$ umwandelt. Mit anderen Worten werden die analogen Signale mit einer gegebenen Abtastfrequenz fs abgetastet, wobei k die k-te Abtastung oder das k-te Sample bezeichnet. Ferner umfasst die Einrichtung 21 eine Transformationseinrichtung 25, die anhand der digitalisierten Signale $u_{U,k}$, $u_{V,k}$ und $u_{W,k}$ eine Clarke-Transformation ausführt, um die beiden Messsignale $\tilde{u}_{\alpha,k}$ und $\tilde{u}_{\beta,k}$, die vorstehend beschrieben sind, in digitalisierter Form zu erhalten.

Darüber hinaus umfasst die Einrichtung 21 eine Mittelungseinrichtung 27, welche jeweilige Mittelwerte über die letzten N Abtastwerte wie folgt ermittelt:

$$\tilde{u}_{\alpha,k|N} = \frac{1}{N}\sum_{i=k-N+1}^{k}\tilde{u}_{\alpha,i} \qquad (12)$$

$$\tilde{u}_{\beta,k|N} = \frac{1}{N}\sum_{i=k-N+1}^{k}\tilde{u}_{\beta,i} \qquad (13)$$

Die Mittelung beginnt jeweils mit dem k-ten Abtastwert.

Unter der Bedingung kleiner Drehzahlen, d.h., dass die Drehfrequenz klein gegen die Abtastfrequenz $f_S$ ist ($\omega/2\pi \ll f_S$), sind die Änderungen von γ und ω für die letzten N Abtastwerte vernachlässigbar. Daher können die Gleichungen (12) und (13) wie folgt angenähert werden:

$$\tilde{u}_{\alpha,k|N} \approx -\omega_{k|N} \cdot \Psi_m \cdot \sin\gamma_{k|N} + \frac{1}{N}\sum_N v_\alpha \qquad (14)$$

$$\tilde{u}_{\beta,k|N} \approx \omega_{k|N} \cdot \Psi_m \cdot \cos\gamma_{k|N} + \frac{1}{N}\sum_N v_\beta \qquad (15)$$

Die Terme des weißen Hintergrundrauschens $v_\alpha$ und $v_\beta$ der Gleichungen (10) und (11) werden somit zu jeweiligen Mittelwerten über N Messwerte. Da die Amplitude eines unkorrelierten oder weißen Rauschens bei einer solchen Mittelung nur mit $\sqrt{N}$ zunimmt, während die kohärenten Signale im jeweiligen ersten Term von Gleichung (14) und (15) jeweils um einen Faktor N zunehmen, erhöht sich das Signal-Rauschverhältnis der kombinierten Signale $\tilde{u}_{\alpha,k|N}$ und $\tilde{u}_{\beta,k|N}$ um einen Faktor $\sqrt{N}$.

Mit anderen Worten verbessert die Mittelungseinrichtung 27 das Signal-Rauschverhältnis seiner Eingangssignale $u_{\alpha,k}$ und $u_{\beta,k}$ (vgl. Fig. 2) um den Faktor $\sqrt{N}$. Durch diese Verbesserung des Signal-Rauschverhältnisses ist es möglich, dass die Einrichtung 21 den Rotorwinkel γ und die Drehgeschwindigkeit ω auch bei geringen Drehzahlen des Rotors zuverlässig ermittelt. Die Anzahl N von Messwerten, über die gemittelt wird, muss ausreichend groß festgelegt werden.

Es muss jedoch zusätzlich beachtet werden, dass eine korrekte Anzahl N von zu mittelnden Messwerten gewählt wird, da die Ausgangssignale der Mittelungseinrichtung 27 das Ergebnis einer Reduktion der Datenrate bzw. eines Down-Samplings sind, die bzw. das mit einer neuen äquivalenten Abtastrate oder Samplingfrequenz von fs/N erfolgt. Die vorstehenden Gleichungen (14) und (15) sind daher nur dann gültig, wenn die folgende Bedingung erfüllt ist:

$$N \cdot \omega \ll 2\pi f_S \qquad\qquad (16)$$

Dies bedeutet, dass man bei sehr geringen Drehzahlen große Werte für N wählen kann, um ein ausreichendes Signal-Rauschverhältnis sicherzustellen. Die vorstehende Bedingung von Gleichung (16) muss jedoch kontinuierlich überwacht werden, da sich der Rotor im Freilauf befindet und sich die Winkelgeschwindigkeit $\omega$ dadurch unkontrolliert ändern kann.

Ein extremes Szenario ist beispielsweise der Zustand nach dem Einschalten der Permanentmagnet-Synchronmaschine und deren Wechselrichter 11. Ein Controller der Permanentmagnet-Synchronmaschine, der die Einrichtung 21 umfasst, hat a-priori keine Information bezüglich $\omega$, und der Rotor kann während dessen durch äußere Lasten mit einer ausreichenden Drehzahl betrieben werden. Dadurch führt die vorstehend beschriebene Mittelung der induzierten Spannungen dazu, dass sich die momentanen Signale mit $\sin\gamma_{k|N}$ und $\cos\gamma_{k|N}$ in den Gleichungen (14) und (15) gegenseitig aufheben. Zumindest in diesem Zustand darf die Einrichtung (21) die Mittelung nicht verwenden, oder sie muss einen relativ kleinen Wert von N wählen. Folglich muss der Mittelungsprozess adaptiv sein und an die momentan vorliegende Drehzahl iterativ angepasst werden.

Daher umfasst die Einrichtung 21 zusätzlich ein Festlegungsmodul 29, das die Ausgangssignale der Mittelungseinrichtung 27 als Eingangssignale empfängt und die Anzahl N der Spannungswerte, über die gemittelt wird, adaptiv und iterativ festlegt. Das Festlegungsmodul 29 gibt folglich eine variable Anzahl N für die Mittelungseinrichtung 27 aus.

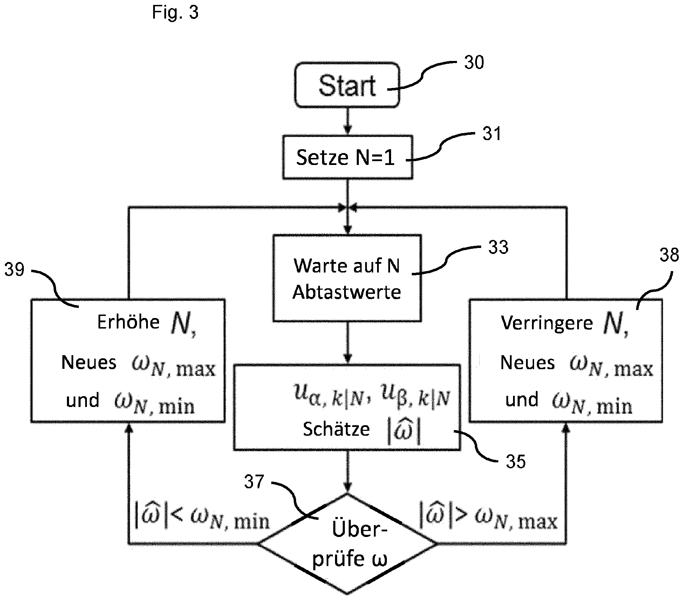

In Fig. 3 sind die Schritte dargestellt, die von dem Festlegungsmodul 29 zur adaptiven Ermittlung der variablen Anzahl N für die Mittelungseinrichtung 27 durchgeführt werden. Nach dem Start bei 30 wird die Anzahl N mit einem festen Wert initialisiert, im vorliegenden Beispiel mit Eins, um das vorstehend beschriebene Szenario zu vermeiden, bei dem sich die momentanen Signale gegenseitig aufheben. Bei 33 wartet das Festlegungsmodul 29, bis N Abtastwerte vorliegen, um anschließend bei 35 den Betrag der Drehgeschwindigkeit $\omega$ basierend auf den Eingangssignalen des Festlegungsmoduls 29 bzw. der Ausgangssignale $u_{\alpha,k|N}$ und $u_{\beta,k|N}$ der Mittelungseinrichtung 27 zu schätzen.

Bei 37 wird der Schätzwert für $\omega$ überprüft, der bei 35 ermittelt wurde. Im Detail wird der Betrag des Schätzwerts für $\omega$ bei 37 mit einem unteren Schwellenwert $\omega_{N,min}$ und mit einem oberen Schwellenwert $\omega_{N,max}$ verglichen. Es hat sich gezeigt, dass es für jeden Wert der variablen Anzahl N einen optimalen Bereich der Drehgeschwindigkeit von $\omega_{N,min}$ bis $\omega_{N,max}$ gibt, in welchem das Signal-Rauschverhältnis mit der Bandbreite der Messungen abgeglichen ist. Der obere Schwellenwert ist durch N festgelegt, und zwar derart, dass ein Aliasing vermieden wird. Der untere Schwellenwert hingegen hängt von dem magnetischen Fluss bzw. der Rotorflussverkettung $\psi_m$ und einem vorgegebenen Zielwert für das Signal-Rauschverhältnis ab. Je größer die Rotorflussverkettung $\psi_m$ ist, umso kleiner ist der untere Schwellenwert $\omega_{N,min}$ für einen bestimmten, vorgegebenen Zielwert des Signal-Rauschverhältnisses.

Wenn sich der Rotor schneller als $\omega_{N,max}$ dreht bzw. der Schätzwert für $\omega$ größer als der obere Schwellenwert ist, wird N bei 38 verringert, um die Bandbreite zu erhöhen. Dies ist erforderlich, da die effektive Abtastrate oder Samplingfrequenz fs/N beträgt und eine hohe Drehgeschwindigkeit Probleme mit Aliasing mit sich bringen könnte. Durch die Verringerung von N verringert sich zwar auch das Signal-Rauschverhältnis der gemittelten Spannungen, die von der Mittelungseinrichtung 27 ausgegeben werden. Aufgrund des erhöhten Signal-Rauschverhältnisses der Eingangssignale des Festlegungsmoduls 29 ist das Signal-Rauschverhältnis auch nach der Verringerung von N bei 38 aufgrund der relativ hohen Drehzahl $\omega$ jedoch immer noch brauchbar.

Liegt der Schätzwert für den Betrag von $\omega$ jedoch unterhalb von $\omega_{N,min}$, ist das Signal-Rauschverhältnis zu gering, um den Rotorwinkel $\gamma$ und die Drehgeschwindigkeit $\omega$ zuverlässig zu ermitteln. In diesem Fall wird die variable Anzahl N bei 39 erhöht, um das Signal-Rauschverhältnis zu verbessern. Die verringerte Bandbreite aufgrund der Erhöhung von N ist nicht relevant, solange sich der Motor tatsächlich langsam dreht und dadurch geringere Anforderungen an die Bandbreite der Einrichtung 21 bestehen. Anhand der Schätzung für $\omega$ werden die Schwellenwerte $\omega_{N,min}$ und $\omega_{N,max}$ bei 38 und 39 in jeder Iteration neu festgelegt.

Es hat sich gezeigt, dass im einfachsten Fall drei Stufen oder Werte für die variable Anzahl N für einen Hochlauf der Permanentmagnet-Synchronmaschine 17 genügen, und zwar N = 100 für sehr geringe Drehzahl, N = 10 für geringe Drehzahl und N = 1 für eine ausreichende Drehzahl, was einer Beendigung der Mittelwertbildung entspricht. Eine feine, adaptive Anpassung der variablen Anpassung N an die vorliegende Drehgeschwindigkeit $\omega$, wie dies vorstehend beschrieben ist, verbessert jedoch die Zuverlässigkeit beim Hochfahren der Permanentmagnet-Synchronmaschine, insbesondere dann, wenn das Hochfahren nicht aus dem Stillstand der Permanentmagnet-Synchronmaschine erfolgt.

In Fig. 4 ist schematisch ein Schätzmodul 41 dargestellt, das einen weiteren Bestandteil der Einrichtung 21 zum Ermitteln des Winkels und der Winkelgeschwindigkeit des Rotors darstellt, deren weitere Bestandteile in Fig. 2 dargestellt sind. Das Schätzmodul 41 erhält als Eingangsgröße die gemittelten Spannungen $u_{\alpha,k|N}$ und $u_{\beta,k|N}$, die von der Mittelungseinrichtung 27 (vgl. Fig. 2) ausgegeben werden. Wenn ein allgemeiner Index $\xi$ eine jeweilige Aktualisierung der gemittelten Spannungen seit den ersten gültigen Abtastwerten bezeichnet, können die Gleichungen (8) und (9) wie folgt dargestellt werden:

$$\hat{\gamma}_\xi = \tan^{-1}\frac{\tilde{u}_{\alpha,\xi}}{\tilde{u}_{\beta,\xi}} - sign(\widehat{\omega}_\xi) \cdot \frac{\pi}{2} \qquad (17)$$

$$\left|\widehat{\omega}_\xi\right| = \frac{1}{\Psi_m} \cdot \sqrt{\tilde{u}_{\alpha,\xi}^2 + \tilde{u}_{\beta,\xi}^2} \qquad (18)$$

Der Betrag der Winkelgeschwindigkeit ω kann somit für jede Aktualisierung $\tilde{u}_{\alpha,\xi}$ und $\tilde{u}_{\beta,\xi}$ direkt ermittelt werden, während die Drehrichtung für einen Satz momentaner Messwerte nicht ohne Weiteres abgeleitet werden kann. Bei einem Nulldurchgang einer der beiden Spannungen $\tilde{u}_\alpha$, $\tilde{u}_\beta$ stellt die Polarität der jeweils anderen der beiden Spannungen jedoch eine klare Information bezüglich der Drehrichtung bereit. Wenn beispielsweise ein Nulldurchgang von $\tilde{u}_{\alpha,\xi}$ überprüft wird, dann gilt bei einem positiven Nulldurchgang, d.h. bei einem Übergang von negativen zu positiven Werten der Spannung:

$$sign\left(\widehat{\omega}_\xi\right) = -sign(\tilde{u}_{\beta,\xi}), \text{ wenn } \tilde{u}_{\alpha,\xi-1} < 0 \text{ und } \tilde{u}_{\alpha,\xi} > 0 \qquad (19)$$

Bei einem negativen Nulldurchgang von $\tilde{u}_{\alpha,\xi}$, d.h. bei einem Übergang von positiven zu negativen Werten der Spannung, gilt entsprechend:

$$sign\left(\widehat{\omega}_\xi\right) = sign(\tilde{u}_{\beta,\xi}), \text{ wenn } \tilde{u}_{\alpha,\xi-1} > 0 \text{ und } \tilde{u}_{\alpha,\xi} < 0 \qquad (20)$$

Entsprechende Formeln gelten selbstverständlich für die Nulldurchgänge von $\tilde{u}_{\beta,\xi}$. Unter Verwendung der Gleichungen (19) und (20) kann die ermittelte Drehrichtung einmal für jede Periode bzw. pro Umlauf des Drehzeigers (vgl. Gleichung (5)) oder in anderen festen, vorgegebenen Zeitintervallen aktualisiert werden. Wenn die Nulldurchgänge beider Signale $\tilde{u}_{\alpha,\xi}$ und $\tilde{u}_{\beta,\xi}$ berücksichtigt werden, kann die Drehrichtung entsprechend mit der doppelten Rate bzw. Häufigkeit aktualisiert werden.

Entsprechend gibt das Schätzmodul 41 von Fig. 4 eine Schätzung des Rotorwinkels $\hat{\gamma}_\xi$ und der Winkelgeschwindigkeit $\widehat{\omega}_\xi$ unter Verwendung der vorstehend genannten Formeln (17) bis (20) aus. Durch die variable Mittelwertbildung in der Mittelungseinrichtung 27 (vgl. Fig. 2) mit der Anpassung der Anzahl N unter den vorstehend beschriebenen Bedingungen kann die Gültigkeit der Schätzung des Rotorwinkels γ in den Bereich geringer Drehzahlen ausgedehnt werden. Eine weitere Ausdehnung des Gültigkeitsbereichs dieser Schätzung ist möglich, wenn weitere Schritte auf die Ausgangssignale des Schätzmoduls 41 angewendet werden, wie diese nachstehend beschrieben sind.

Fig. 5 zeigt eine zweite Ausführungsform der Einrichtung 21 zum Ermitteln des Winkels und der Winkelgeschwindigkeit des Rotors. Die zweite Ausführungsform unterscheidet sich von der vorstehend beschriebenen ersten Ausführungsform, die in Fig. 2 bis 4 dargestellt ist, lediglich dadurch, dass die zweite Ausführungsform von Fig. 5 zusätzlich ein Kalmanfilter 51 umfasst. Ansonsten umfasst die zweite Ausführungsform der Einrichtung 21 von Fig. 5 somit ebenso den Analog-Digitalwandler 23, die Transformationseinrichtung 25, die Mittelungseinrichtung 27 und das Festlegungsmodul 29, die im Zusammenhang mit Fig. 2 beschrieben sind, sowie das Schätzmodul 41, das in Fig. 4 dargestellt ist. Die vorstehende Beschreibung dieser Module gilt folglich auch für die zweite Ausführungsform der Einrichtung 21 von Fig. 5. Das Kalmanfilter 51 erhält als Eingangssignale die Ausgangssignale $\hat{\gamma}_\xi$ und $\widehat{\omega}_\xi$ des Schätzmoduls 41.

Die theoretischen Grundlagen von Kalmanfiltern sind in der Technik bekannt und werden daher an dieser Stelle nicht ausführlich beschrieben. Stattdessen werden lediglich spezielle Aspekte im Zusammenhang mit der Drehung des Rotors der Permanentmagnet-Synchronmaschine erläutert.

Die vorstehend beschriebene Verarbeitung der Spannungssignale $\tilde{u}_\alpha$ und $\tilde{u}_\beta$, d.h. die Mittelwertbildung mit variabler Anzahl N, ist unabhängig von der speziellen Natur der Signale und für beliebige Spannungssignale gültig. Die Verwendung des Kalmanfilters 51 von Fig. 5 berücksichtigt jedoch zusätzlich die Natur der Signale insofern, dass die Bewegung des Rotors den Newtonschen Bewegungsgesetzen genügen muss.

Entsprechend den Newtonschen Bewegungsgesetzen kann ein einfaches mechanisches Modell für den Rotor im Freilauf wie folgt ausgedrückt werden:

$$J \cdot \frac{1}{p} \cdot \frac{d\omega}{dt} = M \qquad (21)$$

wobei J das gesamte Trägheitsmoment der rotierenden Teile repräsentiert, die durch einen Motor der Permanentmagnet-Synchronmaschine 17 angetrieben werden, p die Anzahl von Polpaaren dieses Motors ist und M das restliche Bremsdrehmoment aufgrund der Last ist, welche durch die Reibung erzeugt wird. Es wird angenommen, dass M eine konstante, kleine und negative Größe ist. Man beachte, dass ω hier die elektrische Winkelgeschwindigkeit ist. Da in einem mechanischen Modell die mechanische Winkelgeschwindigkeit verwendet werden muss, muss in der vorstehenden Gleichung der Faktor 1/p eingeführt werden. Wenn Gleichung (21) in die vorstehend beschriebene diskrete Domäne übertragen wird, d.h. auf die Signale mit der Abtastfrequenz $f_S = 1/T_S$ nach Analog-Digitalwandlung und Clarke-Transformation, erhält man das folgende System von Differenzengleichungen:

$$\omega_k = \omega_{k-1} + \frac{p}{J} \cdot T_S \cdot M_{k-1} \qquad (22)$$

$$\gamma_k = \gamma_{k-1} + T_S \cdot \omega_{k-1} + \frac{1}{2} \cdot \left( \frac{p}{J} \cdot T_S \cdot M_{k-1} \right) \cdot T_S \qquad (23)$$

$$M_k = M_{k-1} \qquad (24)$$

Der Index k impliziert die konstante Abtastrate mit der Abtastfrequenz fs. Unter Berücksichtigung der Mittelwertbildung mit variabler Anzahl N und jeweiliger Aktualisierung ξ, wie diese vorstehend beschrieben sind, lassen sich die Gleichungen (22) bis (24) folgendermaßen modifizieren:

$$\omega_\xi = \omega_{\xi-1} + \frac{p \cdot N \cdot T_S}{J} \cdot M_{\xi-1} \qquad (25)$$

$$\gamma_\xi = \gamma_{\xi-1} + N \cdot T_S \cdot \omega_{\xi-1} + \frac{p \cdot N^2 \cdot T_S^2}{2 \cdot J} \cdot M_{\xi-1} \qquad (26)$$

$$M_\xi = M_{\xi-1} \qquad (27)$$

Damit ist das Gleichungssystem für den Prädiktor des Kalmanfilters vollständig. Bei Kalmanfiltern unterscheidet man grundsätzlich zwischen einer A-priori-Schätzung, die mit $\hat{x}_\xi^-$ bezeichnet wird, und einer A-posteriori-Schätzung, die mit $\hat{x}_\xi^*$ bezeichnet wird. Für jeden Aktualisierungsschritt ξ kann eine A-priori-Schätzung anhand der letzten A-posteriori-Schätzung $\widehat{\omega}_{\xi-1}^*$ und $\hat{x}_\xi^*$ durch das Gleichungssystem (25) bis (27) vorausgesagt werden. Im Einzelnen kann diese Schätzung folgendermaßen dargestellt werden:

$$\widehat{\omega}_\xi^- = \widehat{\omega}_{\xi-1}^* + \frac{p \cdot N \cdot T_S}{J} \cdot M_{\xi-1}^*$$

$$\left. \begin{array}{l} \hat{\gamma}_\xi^- = \hat{\gamma}_{\xi-1}^* + N \cdot T_S \cdot \widehat{\omega}_{\xi-1}^* + \frac{p \cdot N^2 \cdot T_S^2}{2 \cdot J} \cdot \widehat{M}_{\xi-1}^* \\ \\ \widehat{M}_\xi^- = \widehat{M}_{\xi-1}^* \end{array} \right\} \qquad (28)$$

Zusätzlich zu der A-priori-Schätzung $\hat{\gamma}_\xi^-$ und $\widehat{\omega}_\xi^-$ gibt es auch die direkte Schätzung anhand der fortgeschrittenen Messung $\hat{\gamma}_\xi$ und $\hat{\omega}_\xi$. Die A-posteriori-Schätzung für jeden Aktualisierungsschritt $\xi$ ist daher eine Fusion anhand der zwei Differenzsignalquellen, die mit einer entsprechenden Kalman-Verstärkung $K_\omega$, $K_\gamma$ und $K_M$ gewichtet werden:

$$\left.\begin{aligned}
\widehat{\omega}_\xi^* &= \widehat{\omega}_\xi^- + K_\omega \cdot \left(\widehat{\omega}_\xi - \widehat{\omega}_\xi^-\right) \\[1em]
\hat{\gamma}_\xi^* &= \hat{\gamma}_\xi^- + K_\omega \cdot \left(\hat{\gamma}_\xi - \hat{\gamma}_\xi^-\right) \\[1em]
\widehat{M}_\xi^* &= \widehat{M}_{\xi-1}^* + K_M \cdot \frac{J \cdot \left(\widehat{\omega}_\xi - \widehat{\omega}_\xi^-\right)}{p \cdot N \cdot T_S}
\end{aligned}\right\} \quad (29)$$

Diese A-posteriori-Schätzung kann als zuverlässigste Schätzung angesehen werden und ist die finale Ausgabe des Kalmanfilters 51 und damit der Einrichtung 21. Das heißt, dass die Einrichtung 21 eine Schätzung $\hat{\gamma}_\xi^*$ und $\widehat{\omega}_\xi^*$ für den Rotorwinkel und die Winkelgeschwindigkeit als Ergebnis der Kalman-Filterung ausgibt. Durch das Kalmanfilter 51 wird die Ausgabe des Schätzmoduls 41 von Fig. 4 weiter verbessert, so dass der Gültigkeitsbereich bzw. Bereich mit zuverlässiger Schätzung für den Rotorwinkel mittels des Kalmanfilters 51 zu noch geringen Drehzahlen ausgedehnt werden kann.

Fig. 6 zeigt schematisch eine beispielhafte Vakuumanlage mit einem Rezipienten 12, der mit einer Turbomolekularpumpe 13 verbunden ist. Die Turbomolekularpumpe 13 umfasst pumpaktive Strukturen wie beispielsweise Rotorscheiben, die zu einem Rotor 14 gehören. Die Turbomolekularpumpe 13 wiederum ist mit einer Vorvakuumpumpe 15 verbunden, die ebenfalls einen Rotor 16 als Teil der pumpaktiven Elemente der Vorvakuumpumpe 15 umfasst.

Zum Antreiben des Rotors 14 der Turbomolekularpumpe 13 ist eine erfindungsgemäße geberlose Permanentmagnet-Synchronmaschine 17 vorgesehen, die den Wechselrichter 11 von Fig. 1 aufweist. Der Rotor 16 der Vorvakuumpumpe wird ebenfalls mit einer solchen Permanentmagnet-Synchronmaschine (nicht dargestellt) angetrieben. Bei Inbetriebnahme der Vakuumanlage wird zunächst die Vorvakuumpumpe 15 eingeschaltet, bis in dem Rezipienten 12 ein geeigneter Unterdruck zum Einschalten der Turbomolekularpumpe 13 vorhanden ist.

Zu Beginn des Hochfahrens der Turbomolekularpumpe 13 und der Vorvakuumpumpe 19 befinden sich die Rotoren 14, 16 nicht notwendigerweise im Stillstand. Dies gilt insbesondere für die Turbomolekularpumpe 13, die eine lange Auslaufzeit bis zum Stillstand des Rotors 14 aufweisen kann. Daher kann ein erneutes Einschalten der Turbomolekularpumpe 13 erfolgen, bevor sich deren Rotor 14 im Stillstand befindet. In diesem Fall können der Winkel $\gamma$ und die Winkelgeschwindigkeit $\omega$ des Rotors 14 mit herkömmlichen Verfahren nicht zuverlässig anhand der Gegen-EMK ermittelt werden, um beim Hochfahren in eine Synchronisationsphase eintreten zu können. Daher können mehrere Versuche erforderlich sein, um die Turbomolekularpumpe 13 hochzufahren. Wenn jedoch die erfindungsgemäße Permanentmagnet-Synchronmaschine 17 und das erfindungsgemäße Verfahren verwendet werden, lassen sich der Winkel $\gamma$ und die Winkelgeschwindigkeit $\omega$ des Rotors 14 auch bei sehr geringen Drehzahlen anhand der Gegen-EMK ermitteln, so dass eine zuverlässige Synchronisation und ein zuverlässiges Hochfahren der Turbomolekularpumpe 13 erfolgt.

Bezugszeichenliste

| | |
|---|---|
| 11 | Drehstrom-Wechselrichter |
| 12 | Rezipient |
| 13 | Turbomolekularpumpe |
| 14 | Rotor |
| 15 | Vorvakuumpumpe |
| 16 | Rotor |
| 17 | Permanentmagnet-Synchronmaschine |
| 21 | Einrichtung zum Ermitteln eines Winkels und einer Winkelgeschwindigkeit des Rotors |
| 23 | Analog-Digitalwandler |
| 25 | Transformationseinrichtung |
| 27 | Mittelungseinrichtung |

29         Festlegungsmodul
30 - 39     Verfahrensschritte
41         Schätzmodul
51         Kalmanfilter

**Patentansprüche**

1. Permanentmagnet-Synchronmaschine (17), insbesondere Drehstrommaschine einer Vakuumpumpe (13, 15), mit:

einem Rotor (14, 16),
einer Einrichtung (21) zum Ermitteln eines Winkels und einer Winkelgeschwindigkeit des Rotors (14, 16) bei kleinen Drehzahlen des Rotors (14, 16) unterhalb einer Betriebsdrehzahl der Permanentmagnet-Synchronmaschine (17) mittels einer rückwirkenden elektromagnetischen Kraft, die anhand zumindest zweier durch den Rotor (14, 16) induzierter Spannungen erfassbar ist, im geberlosen Betrieb der Permanentmagnet-Synchronmaschine (17), wobei die Einrichtung (21) umfasst:

einen Analog-Digitalwandler (23), der die zumindest zwei induzierten Spannungen digitalisiert,
eine Mittelungseinrichtung (27), welche zumindest zwei gemittelte Spannungen über eine variable Anzahl N von Messwerten der zumindest zwei digitalisierten Spannungen berechnet,
ein Festlegungsmodul (29), das die variable Anzahl N in Abhängigkeit von der Drehzahl des Rotors (14, 16) festlegt, und
ein Schätzmodul (41), das den Winkel und die Winkelgeschwindigkeit des Rotors (14, 16) anhand der zumindest zwei gemittelten Spannungen schätzt,

**dadurch gekennzeichnet, dass**

das Festlegungsmodul (29) die Anzahl N mit einem vorbestimmten Wert initialisiert und die Anzahl N iterativ in Abhängigkeit von der ermittelten Winkelgeschwindigkeit anpasst,
wobei das Festlegungsmodul (29) die Anzahl N erhöht, wenn die Winkelgeschwindigkeit einen unteren Schwellenwert unterschreitet, und die Anzahl N verringert, wenn die Winkelgeschwindigkeit einen oberen Schwellenwert überschreitet.

2. Permanentmagnet-Synchronmaschine (17) nach Anspruch 1, wobei das Festlegungsmodul (29) den oberen und unteren Schwellenwert anhand eines Sollwerts für das Signal-Rauschverhältnis der Winkelgeschwindigkeit ermittelt.

3. Permanentmagnet-Synchronmaschine (17) nach Anspruch 1 oder 2, wobei das Festlegungsmodul (29) die Anzahl N verringert, wenn die Drehzahl des Rotors (14, 16) zunimmt.

4. Permanentmagnet-Synchronmaschine (17) nach einem der vorstehenden Ansprüche, wobei das Schätzmodul (41) eine Drehrichtung des Rotors (14, 16) anhand der zumindest zwei gemittelten Spannungen ermittelt.

5. Permanentmagnet-Synchronmaschine (17) nach Anspruch 4, wobei das Schätzmodul (41) die Drehrichtung des Rotors (14, 16) anhand eines Nulldurchgangs für eine der zwei gemittelten Spannungen und anhand des Vorzeichens für die andere der zwei gemittelten Spannungen identifiziert.

6. Permanentmagnet-Synchronmaschine (17) nach einem der vorstehenden Ansprüche, wobei die Einrichtung (21) zum Ermitteln des Winkels und der Winkelgeschwindigkeit des Rotors (14, 16) ferner ein Kalmanfilter (51) umfasst, das auf einem mechanischen Modell für die Bewegung des Rotors (14, 16) basiert.

7. Permanentmagnet-Synchronmaschine (17) nach Anspruch 6, wobei das Kalmanfilter eine A-priori-Schätzung und eine A-posteriori-Schätzung für den Winkel des Rotors (14, 16), für die Winkelgeschwindigkeit des Rotors (14, 16) und für ein Bremsdrehmoment des Rotors (14, 16) umfasst.

8. Vakuumpumpe (13, 15) mit einer Permanentmagnet-Synchronmaschine (17) nach einem der vorstehenden Ansprüche.

**9.** Verfahren zum Ermitteln eines Winkels und einer Winkelgeschwindigkeit eines Rotors (14, 16) in einer Permanentmagnet-Synchronmaschine (17) bei kleinen Drehzahlen des Rotors (14, 16) unterhalb einer Betriebsdrehzahl der Permanentmagnet-Synchronmaschine (17), wobei die Permanentmagnet-Synchronmaschine den Rotor (14, 16) und einen Analog-Digitalwandler (23) umfasst, wobei das Verfahren umfasst, dass:

zumindest zwei durch den Rotor (14, 16) induzierte Spannungen mittels des Analog-Digitalwandlers (23) erfasst werden, welche eine rückwirkende elektromotorische Kraft in einem geberlosen Betrieb der Permanentmagnet-Synchronmaschine (17) repräsentieren,
die zumindest zwei induzierten Spannungen mittels des Analog-Digitalwandlers (23) digitalisiert werden,
zumindest zwei gemittelte Spannungen anhand einer variablen Anzahl N von Messwerten der zumindest zwei digitalisierten Spannungen berechnet werden, wobei die variable Anzahl N in Abhängigkeit von der Drehzahl des Rotors (14, 16) festgelegt wird, und
der Winkel sowie die Winkelgeschwindigkeit des Rotors (14, 16) anhand der zumindest zwei gemittelten Spannungen geschätzt werden, **dadurch gekennzeichnet, dass**
die Anzahl N mit einem vorbestimmten Wert initialisiert wird und die Anzahl N iterativ in Abhängigkeit von der ermittelten Winkelgeschwindigkeit angepasst wird,
wobei die Anzahl N erhöht wird, wenn die Winkelgeschwindigkeit einen unteren Schwellenwert unterschreitet, und die Anzahl N verringert wird, wenn die Winkelgeschwindigkeit einen oberen Schwellenwert überschreitet.

**10.** Verfahren nach Anspruch 9, wobei
eine Drehrichtung des Rotors (14, 16) anhand der zumindest zwei gemittelten Spannungen ermittelt wird.

**11.** Verfahren nach Anspruch 10, wobei
die Drehrichtung des Rotors (14, 16) anhand eines Nulldurchgang für eine der zwei gemittelten Spannungen und anhand des Vorzeichens für die andere der zwei gemittelten Spannungen identifiziert wird.

## Claims

**1.** A permanent magnet synchronous machine (17), in particular a three-phase machine of a vacuum pump (13, 15), comprising:

a rotor (14, 16);
a device (21) for determining an angle and an angular velocity of the rotor (14, 16) at low rotational speeds of the rotor (14, 16) below an operating speed of the permanent magnet synchronous machine (17) by means of a back electromagnetic force, which can be detected based on at least two voltages induced by the rotor (14, 16), in an encoderless operation of the permanent magnet synchronous machine (17), wherein the device (21) comprises:

an analog-to-digital converter (23) which digitizes the at least two induced voltages;
an averaging device (27) which calculates at least two averaged voltages via a variable number N of measurement values of the at least two digitized voltages;
a determination module (29) which determines the variable number N in dependence on the rotational speed of the rotor (14, 16); and
an estimation module (41) which estimates the angle and the angular velocity of the rotor (14, 16) based on the at least two averaged voltages,

**characterized in that**

the determination module (29) initializes the number N with a predetermined value and iteratively adjusts the number N in dependence on the determined angular velocity,
wherein the determination module (29) increases the number N when the angular velocity falls below a lower threshold value and reduces the number N when the angular velocity exceeds an upper threshold value.

**2.** A permanent magnet synchronous machine (17) according to claim 1, wherein
the determination module (29) determines the upper and lower threshold values with reference to a desired value for the signal-to-noise ratio of the angular velocity.

3. A permanent magnet synchronous machine (17) according to claim 1 or 2, wherein
the determination module (29) reduces the number N when the rotational speed of the rotor (14, 16) increases.

4. A permanent magnet synchronous machine (17) according to any one of the preceding claims, wherein
the estimation module (41) determines a direction of rotation of the rotor (14, 16) based on the at least two averaged voltages.

5. A permanent magnet synchronous machine (17) according to claim 4, wherein
the estimation module (41) identifies the direction of rotation of the rotor (14, 16) based on a zero crossing for one of the two averaged voltages and based on the sign for the other of the two averaged voltages.

6. A permanent magnet synchronous machine (17) according to any one of the preceding claims, wherein
the device (21) for determining the angle and the angular velocity of the rotor (14, 16) further comprises a Kalman filter (51) which is based on a mechanical model for the movement of the rotor (14, 16).

7. A permanent magnet synchronous machine (17) according to claim 6, wherein
the Kalman filter comprises an a priori estimate and an a posteriori estimate for the angle of the rotor (14, 16), for the angular velocity of the rotor (14, 16) and for a braking torque of the rotor (14, 16).

8. A vacuum pump (13, 15) comprising a permanent magnet synchronous machine (17) according to any one of the preceding claims.

9. A method for determining an angle and an angular velocity of a rotor (14, 16) in a permanent magnet synchronous machine (17) at low rotational speeds of the rotor (14, 16) below an operating speed of the permanent magnet synchronous machine (17), wherein the permanent magnet synchronous machine comprises the rotor (14, 16) and an analog-to-digital converter (23),
wherein the method comprises:

at least two voltages induced by the rotor (14, 16), which represent a back electromotive force in an encoderless operation of the permanent magnet synchronous machine (17), being detected by means of the analog-to-digital converter (23),
the at least two induced voltages being digitized by means of the analog-to-digital converter (23),
at least two averaged voltages being calculated based on a variable number N of measurement values of the at least two digitized voltages, wherein the variable number N is determined in dependence on the rotational speed of the rotor (14, 16), and
the angle and the angular velocity of the rotor (14, 16) being estimated based on the at least two averaged voltages,

**characterized in that**

the number N is initialized with a predetermined value and the number N is iteratively adjusted in dependence on the determined angular velocity,
wherein the number N is increased if the angular velocity falls below a lower threshold value and the number N is reduced if the angular velocity exceeds an upper threshold value.

10. A method according to claim 9, wherein
a direction of rotation of the rotor (14, 16) is determined based on the at least two averaged voltages.

11. A method according to claim 10, wherein
the direction of rotation of the rotor (14, 16) is identified based on a zero crossing for one of the two averaged voltages and based on the sign for the other of the two averaged voltages.

**Revendications**

1. Machine synchrone à aimants permanents (17), en particulier machine à courant triphasé d'une pompe à vide (13, 15), comprenant :

un rotor (14, 16),
un dispositif (21) destiné à déterminer un angle et une vitesse angulaire du rotor (14, 16), à petites vitesses de rotation du rotor (14, 16) inférieures à une vitesse de fonctionnement de la machine synchrone à aimants permanents (17), au moyen d'une force électromagnétique rétroactive qui peut être détectée à partir d'au moins deux tensions induites par le rotor (14, 16) lors d'un fonctionnement sans capteur de la machine synchrone à aimants permanents (17), ledit dispositif (21) comprenant :

un convertisseur analogique-numérique (23) qui numérise lesdites au moins deux tensions induites,
un dispositif de calcul de moyenne (27) qui calcule au moins deux tensions moyennées sur un nombre variable N de valeurs de mesure desdites au moins deux tensions numérisées,
un module de spécification (29) qui spécifie le nombre variable N en fonction de la vitesse de rotation du rotor (14, 16), et
un module d'estimation (41) qui estime l'angle et la vitesse angulaire du rotor (14, 16) à partir desdites au moins deux tensions moyennées,
**caractérisée en ce que**
le module de spécification (29) initialise le nombre N avec une valeur prédéterminée et adapte le nombre N de manière itérative en fonction de la vitesse angulaire déterminée,
le module de spécification (29) augmente le nombre N lorsque la vitesse angulaire passe au-dessous d'une valeur seuil inférieure et diminue le nombre N lorsque la vitesse angulaire passe au-dessus d'une valeur seuil supérieure.

2. Machine synchrone à aimants permanents (17) selon la revendication 1, dans laquelle
le module de spécification (29) détermine les seuils supérieur et inférieur à partir d'une valeur de consigne du rapport signal sur bruit de la vitesse angulaire.

3. Machine synchrone à aimants permanents (17) selon la revendication 1 ou 2,
dans laquelle
le module de spécification (29) diminue le nombre N lorsque la vitesse de rotation du rotor (14, 16) augmente.

4. Machine synchrone à aimants permanents (17) selon l'une des revendications précédentes,
dans laquelle
le module d'estimation (41) détermine un sens de rotation du rotor (14, 16) à partir desdites au moins deux tensions moyennées.

5. Machine synchrone à aimants permanents (17) selon la revendication 4, dans laquelle
le module d'estimation (41) identifie le sens de rotation du rotor (14, 16) à partir d'un passage par zéro pour l'une des deux tensions moyennées et à partir du signe pour l'autre des deux tensions moyennées.

6. Machine synchrone à aimants permanents (17) selon l'une des revendications précédentes,
dans laquelle
le dispositif (21) destiné à déterminer l'angle et la vitesse angulaire du rotor (14, 16) comprend en outre un filtre de Kalman (51) basé sur un modèle mécanique pour le mouvement du rotor (14, 16).

7. Machine synchrone à aimants permanents (17) selon la revendication 6, dans laquelle
le filtre de Kalman comprend une estimation à priori et une estimation à posteriori pour l'angle du rotor (14, 16), pour la vitesse angulaire du rotor (14, 16) et pour un couple de freinage du rotor (14, 16).

8. Pompe à vide (13, 15) comprenant une machine synchrone à aimants permanents (17) selon l'une des revendications précédentes.

9. Procédé de détermination d'un angle et d'une vitesse angulaire d'un rotor (14, 16) dans une machine synchrone à aimants permanents (17), à petites vitesses de rotation du rotor (14, 16) inférieures à une vitesse de fonctionnement de la machine synchrone à aimants permanents (17), la machine synchrone à aimants permanents comprenant le rotor (14, 16) et un convertisseur analogique-numérique (23),
le procédé consistant à :

détecter au moins deux tensions, induites par le rotor (14, 16), au moyen du convertisseur analogique-numérique (23), lesquelles représentent une force électromotrice rétroactive lors d'un fonctionnement sans capteur de la machine synchrone à aimants permanents (17),

numériser lesdites au moins deux tensions induites au moyen du convertisseur analogique-numérique (23),

calculer au moins deux tensions moyennées à partir d'un nombre variable N de valeurs de mesure desdites au moins deux tensions numérisées, le nombre variable N étant spécifié en fonction de la vitesse de rotation du rotor (14, 16), et

estimer l'angle ainsi que la vitesse angulaire du rotor (14, 16) à partir desdites au moins deux tensions moyennées,

**caractérisé en ce que**

le nombre N est initialisé avec une valeur prédéterminée, et le nombre N est adapté de manière itérative en fonction de la vitesse angulaire déterminée,

le nombre N est augmenté lorsque la vitesse angulaire passe au-dessous d'une valeur seuil inférieure, et le nombre N est diminué lorsque la vitesse angulaire passe au-dessus d'une valeur seuil supérieure.

10. Procédé selon la revendication 9,

dans lequel

un sens de rotation du rotor (14, 16) est déterminé à partir desdites au moins deux tensions moyennées.

11. Procédé selon la revendication 10,

dans lequel

le sens de rotation du rotor (14, 16) est identifié à partir d'un passage par zéro pour l'une des deux tensions moyennées et à partir du signe pour l'autre des deux tensions moyennées.

Fig. 1A

Fig. 1B

Fig. 2

Fig. 3

```
                          ┌─────────┐
                          │  Start  │ ── 30
                          └────┬────┘
                               │
                          ┌────▼──────┐
                          │ Setze N=1 │ ── 31
                          └────┬──────┘
                               │
        ┌──────────────────────┼──────────────────────┐
        │              ┌────────▼────────┐             │
        │              │  Warte auf N    │ ── 33       │
   39 ──┤              │  Abtastwerte    │             ├── 38
┌───────▼────────┐     └────────┬────────┘     ┌───────▼────────┐
│  Erhöhe N,     │              │              │ Verringere N,  │
│                │     ┌────────▼────────┐     │                │
│ Neues ωN,max   │     │ uα,k|N, uβ,k|N  │     │ Neues ωN,max   │
│                │     │  Schätze |ω̂|    │     │                │
│ und ωN,min     │     └────────┬────────┘     │ und ωN,min     │
└───────▲────────┘              │         ── 35 └───────▲────────┘
        │            37 ┌───────▼───────┐               │
        │ |ω̂|< ωN,min   │    Über-       │  |ω̂|> ωN,max  │
        └───────────────┤   prüfe ω      ├───────────────┘
                        └───────────────┘
```

$u_{\alpha,k|N}$, $u_{\beta,k|N}$

Schätze $|\hat{\omega}|$

Erhöhe $N$, Neues $\omega_{N,\max}$ und $\omega_{N,\min}$

Verringere $N$, Neues $\omega_{N,\max}$ und $\omega_{N,\min}$

$|\hat{\omega}| < \omega_{N,\min}$

$|\hat{\omega}| > \omega_{N,\max}$

Fig. 4

$$u_{\alpha, k|N} \circ \quad\longrightarrow\quad \boxed{\text{Schätzmodul}}^{\;41} \quad\longrightarrow\quad \circ\, \hat{\gamma}_{\xi}$$

$$u_{\beta, k|N} \circ \quad\longrightarrow\quad \phantom{\boxed{\text{Schätzmodul}}} \quad\longrightarrow\quad \circ\, \hat{\omega}_{\xi}$$

21

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3422559 B1
- EP 3726725 A1

- CN 112910329 A